# EUROPEAN PATENT SPECIFICATION

(11) **EP 4 064 523 B1**
(45) Date of publication and mention of the grant of the patent: **02.09.2026**
(21) Application number: 20902169.0
(22) Date of filing: 18.12.2020
(51) Int. Cl.: H02K 9/19, H02K 1/20, H02K 5/20, H02K 1/16

(54) **IRON CORE AND MOTOR**
EISENKERN UND MOTOR
NOYAU DE FER ET MOTEUR

(30) Priority: 20.12.2019 CN 201911329953
(43) Date of publication of application: 28.09.2022
(73) Proprietor: Yinwang Intelligent Technologies Co., Ltd., Shenzhen, Guangdong 518129 (CN)
(72) Inventor: LI, Mengde, Shenzhen, Guangdong 518129 (CN); WU, Xiaopeng, Shenzhen, Guangdong 518129 (CN); WANG, Yibo, Shenzhen, Guangdong 518129 (CN)
(74) Representative: Pfenning, Meinig & Partner mbB
(86) International application number: PCT/CN2020/137466
(87) International publication number: WO 2021/121360

(56) References cited:
- WO-A1-2011/009514
- CN-A- 108 233 566
- CN-A- 109 450 128
- CN-A- 111 049 290
- CN-U- 209 545 273
- CN-U- 209 545 273
- CN-U- 209 545 273
- DE-A1- 102012 017 293
- DE-A1- 102013 021 392
- JP-A- 2010 154 678
- US-A1- 2010 033 040
- US-A1- 2013 234 545
- US-A1- 2016 118 857

## Description

### TECHNICAL FIELD

Embodiments of this application relate to the field of power energy, and in particular, to an iron core and a motor that includes the iron core.

### BACKGROUND

With development of science and technology, people have a higher demand for power equipment. Represented by electric vehicles, electric vehicles provide users with a convenient transportation manner through their excellent environmental protection performance, and therefore become a future mainstream direction. In electric vehicle technologies, a motor as a core drive component of an electric vehicle provides a driving force or a recovery force for the electric vehicle. Development of motors determines development of power equipment. Currently, motors gradually develop towards a direction of high power densities and small volumes. However, as power densities of the motors increase and motor volumes of the motors decrease, a higher requirement is imposed on heat dissipation of the motors.

Because oil cooling is an efficient heat dissipation manner, an oil-cooling manner is usually used in a conventional technology for motor cooling and heat dissipation. In this technology, a spray ring is usually disposed at an end of a motor winding, and a special oil passage disposed on a motor is used to spray coolant oil directly onto the motor winding by using the spray ring, so as to directly cool the motor winding. In this manner, the coolant oil is usually in small-area contact or has no contact with an iron core in a stator component, which greatly decreases heat dissipation efficiency of the iron core. In addition, a special oil passage usually needs to be disposed on a housing to connect to the spray ring, and this makes a structure of the housing complex. Besides, the spray ring needs to closely coordinate with the end of the motor winding, and this increases difficulty in assembling and manufacturing components in the motor, and consequently increases a heat dissipation cost of the motor. Therefore, how to increase heat dissipation efficiency of an iron core in a stator component in a motor and reduce a motor assembly cost becomes a problem to be solved.
US 2013/234545 A1 discloses an electric machine that includes a stator having an outer circumference. Spaced apart first walls are arranged about the outer circumference and provide generally parallel first channels. A second wall adjoins the first wall and is arranged about the outer circumference providing a second channel in fluid communication with the first channels, thus, providing a tortuous fluid flow path about the circumference.
WO 2011/009514 A1 relates to a stator of a hybrid or electric vehicle, having a plurality of stator segments arranged substantially in an annular array and the axes of which are oriented substantially radially, and having a cooling device for cooling the stator.
JP 2010 154678 A teaches a solution for providing a stator unit which has an appropriate number of fins and a fin forming pitch so that the fins are not aligned while fixing portions for coupling and fixing are formed on the outer circumferential surface. DE 10 2012 017293 A1 discloses a stator with pins on the outer wall to achieve efficient cooling.

### SUMMARY

The invention is defined in the independent claims. According to an iron core and a motor provided in this application, forming axial oil passing grooves on an outer wall of the iron core enables coolant oil to reach sufficient contact with the iron core, thereby improving cooling efficiency of the iron core. In addition, through the axial oil passing grooves, the coolant oil is enabled to flow into winding ends to cool the windings, and no spray ring needs to be disposed, so that a special oil passage connected to a spray ring does not need to be formed on a housing, thereby reducing a motor assembly cost.

To resolve the foregoing technical problem, the following technical solutions are used in this application:

According to a first aspect, an embodiment of this application provides an iron core, applied to a motor, as defined in claim 1. The iron core is cylindrical, and the iron core includes an inner wall, an outer wall, and two ends. Grooves are disposed on the inner wall of the iron core, and are configured to enable windings to be built in, and the built-in windings form end windings respectively at the two ends of the iron core. Axial oil passing grooves are disposed on the outer wall of the iron core, and the axial oil passing grooves extend from one end of the iron core to the other end along an axial direction. External coolant oil flows into the axial oil passing grooves to cool the iron core, and the external coolant oil flows to the two ends of the iron core through the axial oil passing grooves to cool the end windings.

The axial oil passing grooves are disposed on the iron core, so that the coolant oil can reach sufficient contact with the outer wall of the iron core, thereby improving heat dissipation efficiency of the iron core.

In addition, in this application, oil passages that flows oil to the end windings are disposed on the iron core, and no complex oil passage needs to be disposed on a housing of the motor, thereby reducing a manufacturing cost of the housing.

Further, because the end windings are directly connected to the iron core, when the coolant oil flows to the two ends through the axial oil passing grooves on the iron core, the coolant oil may directly fall on the end windings to cool the end windings, and no cooling ring needs to be disposed between the housing and the end windings, thereby reducing a motor assembly cost.

With reference to the first aspect, in a possible implementation, there are a plurality of axial oil passing grooves, and the plurality of axial oil passing grooves are spaced along a circumferential direction of the iron core.

Herein, a quantity of the axial oil passing grooves may be 3, 4, 5, or the like, which is not specifically limited and is set based on a requirement of an application scenario. The plurality of axial oil passing grooves may have equal or unequal radians. A radian interval between every two axial oil passing grooves may be equal. For example, six axial oil passing grooves are disposed on the iron core along the circumferential direction. A radian of each axial oil passing groove may be 30 degrees, and a radian interval between every two axial oil passing grooves is also 60 degrees.

A plurality of circumferential oil passing grooves are disposed, and the plurality of axial oil passing grooves are spaced, so that the outer wall of the iron core can reach contact with the coolant oil in a plurality of directions, so as to adequately cool the iron core.

With reference to the first aspect, in a possible implementation, a pin array is disposed inside at least some of the axial oil passing grooves.

When the coolant oil flows into the axial oil passing grooves that have pins, turbulence flows can be formed in the axial oil passing grooves. In this way, the coolant oil can stay in contact with the outer wall of the iron core for a longer time. In addition, when the coolant oil flows to two sides of the iron core, a plurality of turbulence flows can be formed in gaps of the pins and continuously flow to the end windings, so that the end windings can reach contact with the coolant oil in a larger area and for a longer time, thereby improving a cooling effect of the end windings.

Further, pin arrays are formed in the axial oil passing grooves of the iron core, so that a gap can exist between every two pins along both the axial direction and the circumferential direction in the axial oil passing grooves. When the coolant oil flows in the pin gaps, a flow speed of the coolant oil can be greatly reduced, thereby increasing a time of contact between the coolant oil and the iron core.

With reference to the first aspect, in a possible implementation, at least some of the axial oil passing grooves are disposed in an upper half of the iron core.

Along the circumferential direction of the iron core, the outer wall of the iron core may be divided into an upper circumferential half and a lower circumferential half. The upper half of the iron core herein refers to the upper circumferential half of the outer wall of the iron core.

Disposing the axial oil passing grooves in the upper half of the iron core enables the coolant oil to, when flowing to the two ends of the iron core, fall from a relatively high position on the end windings, and flow from upper parts of the windings to lower parts thereof under an effect of gravity, thereby further increasing the area of contact between the coolant oil and the windings, and further improving the cooling effect of the end windings.

With reference to the first aspect, the iron core is formed by stacking a plurality of punchings along the axial direction; and the punching is ring-shaped, a plurality of toothed grooves are disposed along a circumferential direction of an inner circle of the punching, and a plurality of arc protrusions and a plurality of arc grooves are disposed alternately along a circumferential direction of an outer circle of the punching.

With reference to the first aspect, in a possible implementation, a quantity of the arc protrusions of the punching is equal to a quantity of the arc grooves of the punching.

With reference to the first aspect, in a possible implementation, a radian of the arc protrusion of the punching is equal to a radian of the arc groove of the punching.

With reference to the first aspect, when the iron core is assembled, the arc protrusions of the plurality of punchings are disposed directly opposite to each other along the axial direction, and the arc grooves of the plurality of punchings are disposed directly opposite to each other along the axial direction, where the arc grooves of the plurality of punchings are stacked along the axial direction to form the axial oil passing grooves of the iron core.

With reference to the first aspect, a plurality of pins are disposed in each of at least some of the arc grooves of the punching, and arc grooves with pins formed and arc grooves with no pin formed are disposed alternately among the arc grooves of the punching; the plurality of arc grooves are recessed towards an interior of the punching by a same depth, and the plurality of pins in each arc groove protrude outwardly by a same height; and when the iron core is assembled, the arc protrusions of the plurality of punchings are disposed directly opposite to each other along the axial direction, and the arc grooves provided with pins and the arc grooves provided with no pin are disposed alternately and directly opposite to each other among the arc grooves of the plurality of punchings; where the arc grooves of the plurality of punchings are stacked along the axial direction to form the axial oil passing grooves of the iron core.

When the punchings are stacked in this manner to form the iron core, pin arrays can be formed in the axial oil passing grooves of the iron core, so that a gap can exist between every two pins along both the axial direction and the circumferential direction on the iron core. When the coolant oil flows in the pin gaps, a flow speed of the coolant oil can be greatly reduced, thereby increasing a time of contact between the coolant oil and the iron core.

According to a second aspect, an embodiment of this application provides a motor. The motor includes a housing and a stator component disposed inside the housing. The stator component includes windings and the iron core according to the first aspect. The windings are built in grooves on an inner wall of the iron core, and form end windings respectively at front and rear ends of the iron core. A part on an outer wall of the iron core that is provided with no axial oil passing groove and an inner wall of the housing abut against each other. A part on the outer wall of the iron core that is provided with no axial oil passing groove and the inner wall of the housing abut against each other, so that the iron core coordinates with the housing to form an oil passage. This can prevent the coolant oil that flows to the axial oil passing grooves from continuing to flow downward to bottoms of the iron core and the housing under an effect of gravity, thereby ensuring that sufficient coolant oil flows to the two ends of the iron core to adequately cool the end windings.

With reference to the second aspect, in a possible implementation, an inlet oil passage is disposed in an upper part of the housing; an outlet oil passage is disposed in a lower part of the housing; a circumferential oil guiding groove is disposed on the inner wall of the housing, the circumferential oil guiding groove extends from the upper part of the housing to the lower part of the housing, and a top of the circumferential oil guiding groove communicates with the inlet oil passage; the inner wall of the housing is further provided with at least two oil passing holes, the at least two oil passing holes are evenly disposed at two ends of the housing, and each oil passing hole communicates with the outlet oil passage; external coolant oil falls on the axial oil passing grooves of the iron core through the inlet oil passage and the circumferential oil guiding groove to cool the iron core; coolant oil gathered in the axial oil passing grooves of the iron core flows to the two ends of the iron core through the axial oil passing grooves, and falls on the end windings to cool the end windings; and coolant oil obtained after cooling the end windings flows to the outlet oil passage through the oil passing holes, and is discharged through the outlet oil passage.

### BRIEF DESCRIPTION OF DRAWINGS

To describe the technical solutions in the embodiments of this application more clearly, the following briefly describes the accompanying drawings for describing the embodiments of this application. Apparently, the accompanying drawings in the following description show merely some embodiments of this application, and a person of ordinary skill in the art may derive other drawings from these accompanying drawings without creative efforts.
FIG. 1 is a schematic diagram of a planar structure of a motor according to an embodiment of this application;
FIG. 2 is a schematic diagram of a structure of an iron core according to an embodiment of this application;
FIG. 3 is a cutaway drawing of a housing according to an embodiment of this application;
FIG. 4 is a schematic diagram of a structure of a punching according to an embodiment of this application;
FIG. 5 is a schematic diagram of a structure of a punching formed by rotating the punching shown in FIG. 4 by 60 degrees according to an embodiment of this application;
FIG. 6 is a partially enlarged schematic diagram of an iron core according to an embodiment of this application; and
FIG. 7 is a front view of a motor according to an embodiment of this application.

### DESCRIPTION OF EMBODIMENTS

The following clearly and completely describes the technical solutions in the embodiments of this application with reference to the accompanying drawings in the embodiments of this application. It's clear that the described embodiments are some but not all of the embodiments of this application. All other embodiments obtained by a person of ordinary skill in the art based on the embodiments of this application without creative efforts shall fall within the protection scope of this application.

"First", "second", or the like mentioned in this specification does not indicate any order, quantity, or importance, but is used only for distinguishing between different components. Likewise, "a/an", "one", or the like does not indicate a quantity limitation either, but is intended to indicate that at least one exists. "Connection", "link", or the like is not limited to a physical or mechanical connection, but may include an electrical connection, whether directly or indirectly.

In the embodiments of this application, the term "and/or" describes an association relationship between associated objects, and represents that three relationships may exist. For example, A and/or B may represent the following three cases: only A exists, both A and B exist, and only B exists.

In the embodiments of this application, the term "example" or "for example" is used to represent giving an example, an illustration, or a description. Any embodiment or design scheme described as an "example" or with "for example" in the embodiments of this application should not be explained as being more preferred or having more advantages than another embodiment or design scheme. Exactly, use of the term such as "example" or "for example" is intended to present a related concept in a specific manner.

In the description of the embodiments of this application, unless otherwise stated, "a plurality of" means two or more than two. For example, a plurality of punchings refer to two or more punchings; and a plurality of grooves refer to two or more grooves.

To make the objectives, technical solutions, and advantages of this application clearer, the following clearly and completely describes the technical solutions in this application with reference to the accompanying drawings in this application. Clearly, the described embodiments are merely some rather than all of the embodiments of this application. All other embodiments obtained by a person of ordinary skill in the art based on the embodiments of this application without creative efforts shall fall within the protection scope of this application.

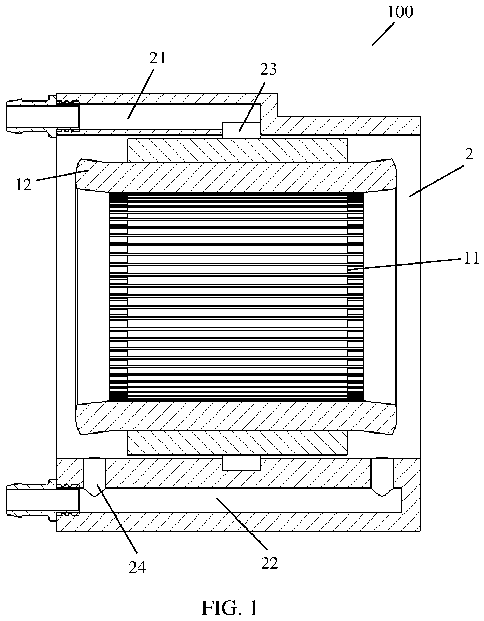

FIG. 1 is a schematic diagram of a planar structure of a motor according to an embodiment of this application.

As shown in FIG. 1, a motor 100 includes a rotating shaft, a rotor component fixedly sleeved on the rotating shaft, a stator component sleeved on the rotor component with a gap in between, and a housing 2 that is fixedly sleeved on the stator component and that is configured to accommodate the foregoing components. The stator component includes an iron core 11 and windings 12 disposed on the iron core 11.

The windings 12 are built in grooves on an inner wall of the iron core 11, and form end windings respectively at front and rear ends of the iron core 11. The iron core 11 includes the inner wall and an outer wall. Circumferential oil passing grooves are disposed on the outer wall. A part on the outer wall of the iron core 11 that is provided with no axial oil passing groove and an inner wall of the housing 2 abut against each other. A part on the outer wall of the iron core 11 that is provided with an axial oil passing groove is not in contact with the inner wall of the housing 2, and there is a gap in between. Coolant oil may flow into the axial oil passing grooves through an oil passage disposed on the housing 2. In this way, the coolant oil can reach sufficient contact with the outer wall of the iron core 11, thereby improving a heat dissipation effect of the iron core 11. After flowing into the axial oil passing grooves, the coolant oil may further flow to the two ends of the iron core 11 through the axial oil passing grooves, so as to cool the windings 12 disposed at the ends of the iron core 11.

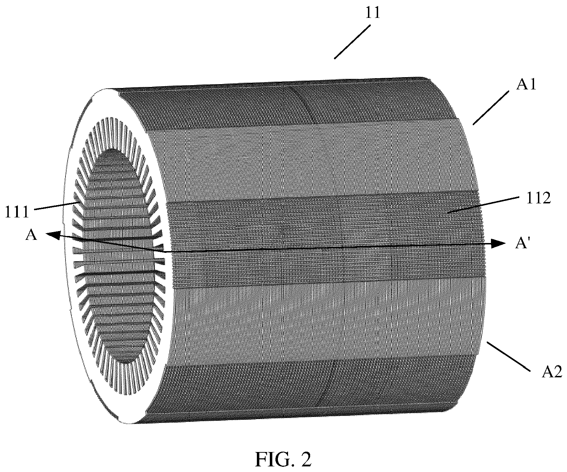

FIG. 2 shows a schematic diagram of a partial structure of the iron core 11. It can be seen from FIG. 2 that, the iron core 11 is cylindrical with a hollow structure inside. The iron core 11 includes the two ends, the inner wall, and the outer wall. Grooves 111 are disposed on the inner wall. When the iron core 11 is viewed from one of its ends, the grooves 111 on its inner wall are toothed and are evenly distributed on along a circumferential direction. Axial oil passing grooves 112 are disposed on the outer wall of the iron core 11, and the axial oil passing grooves 112 extend from one end of the iron core 11 to the other end along an axial direction. Along the circumferential direction, parts on the outer wall of the iron core 11 that are provided with axial oil passing grooves 112 and parts on the outer wall of the iron core 11 that are provided with no axial oil passing groove 112 are alternately arranged.

Herein, a quantity of the axial oil passing grooves 112 may be 3, 4, 5, or the like, which is not specifically limited and is set based on a requirement of an application scenario. When there are a plurality of axial oil passing grooves, the plurality of axial oil passing grooves may have equal or unequal radians. A radian interval between every two axial oil passing grooves 112 may be equal. For example, six axial oil passing grooves are disposed on the iron core along the circumferential direction. A radian of each axial oil passing groove 112 may be 30 degrees, and a radian interval between every two axial oil passing grooves 112 is also 60 degrees.

In some possible implementations, a pin array is disposed inside some or all of the axial oil passing grooves 112.

Preferably, a pin array is disposed inside all of the axial oil passing grooves 112. Herein, a height by which each pin in the pin array protrudes outwardly does not exceed a height of a cylindrical surface on which the parts on the iron core 11 that are provided with no axial oil passing groove. In this way, when the coolant oil flows into the axial oil passing grooves 112 that have pins, turbulence flows can be formed in the axial oil passing grooves 112. In this way, the coolant oil can stay in contact with the outer wall of the iron core for a longer time. In addition, when the coolant oil flows to two sides of the iron core 11, a plurality of turbulence flows can be formed in gaps of the pins and continuously flow to the end windings, so that the end windings can reach contact with the coolant oil in a larger area and for a longer time, thereby improving a cooling effect of the end windings. Further, pin arrays are formed in the axial oil passing grooves 112 of the iron core 11, so that a gap can exist between every two pins along both the axial direction and the circumferential direction in the axial oil passing grooves 112. When the coolant oil flows in the pin gaps, a flow speed of the coolant oil can be greatly reduced, thereby increasing a time of contact between the coolant oil and the iron core.

In some possible implementations, at least some of the axial oil passing grooves 112 are disposed in an upper half of the iron core 11.

Along the circumferential direction of the iron core 11, that is, a direction AA' in the figure, the outer wall of the iron core 11 may be divided into an upper circumferential half A1 and a lower circumferential half A2. The upper half of the iron core 11 herein refers to the upper circumferential half A1 of the outer wall of the iron core, as shown in FIG. 2.

Disposing some of the axial oil passing grooves 112 in the upper half of the iron core 11 enables the coolant oil to, when flowing to the two ends of the iron core 11, fall from a relatively high position on the end windings, and flow from upper parts of the windings to lower parts thereof under an effect of gravity, thereby further increasing the area of contact between the coolant oil and the windings, and further improving the cooling effect of the end windings.

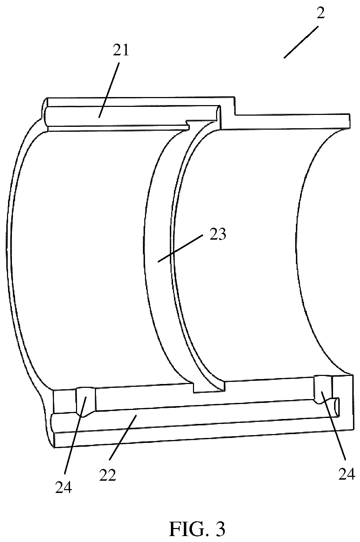

FIG. 3 shows a cutaway drawing of the housing 2. As shown in FIG. 1 and FIG. 3, an inlet oil passage 21 is disposed in an upper part of the housing 2, and an outlet oil passage 22 is disposed in a lower part of the housing 2.

Along the circumferential direction, a circumferential oil guiding groove 23 is further disposed on the inner wall of the housing 2. The circumferential oil guiding groove 23 extends from an upper part of the inner wall of the housing 2 to a lower part thereof. A top of the circumferential oil guiding groove 23 communicates with the inlet oil passage 21, but a bottom thereof does not communicate with the outlet oil passage 22. The circumferential oil guiding groove 23 may be separately distributed on two sides of the inlet oil passage 21 (for example, distributed on a left side and a right side of the circumferential oil guiding groove 23). On one side of the inlet oil passage 21, a quantity of the circumferential oil guiding grooves 23 may be 1, 2, 3, or the like, which is not limited herein. The circumferential oil guiding groove 23 communicates with the axial oil passing grooves 112.

For example, when one circumferential oil guiding groove 23 is disposed on a left inner wall of the housing 2, the circumferential oil guiding groove 23 may be disposed in a middle position of the housing 2 along the axial direction, as shown in FIG. 3. When there are a plurality of circumferential oil guiding grooves 23, the plurality of circumferential oil guiding grooves may be evenly spaced (for example, distributed at equal spaces) along the axial direction.

The lower part of the inner wall of the housing 2 is further provided with an oil passing hole 24, and the oil passing hole 24 communicates with the outlet oil passage 22. Because the end windings 12 are disposed at both ends of the iron core 11, an oil passing hole 24 may be separately disposed in the lower part of the inner wall at each of two ends of the housing 2. The figure shows a case in which one oil passing hole 24 is disposed at each of the two ends of the housing. It should be noted that, a quantity of the oil passing holes 24 is not limited in this embodiment of this application, and is set based on a requirement of the motor. For example, two or three oil passing holes may be disposed in the lower part of the inner wall at each of the two ends of the housing 2.

In application, the coolant oil is diverted to the circumferential oil guiding groove 23 through the inlet oil passage 21, and the coolant oil flows into the axial oil passing grooves 112 on the outer wall of the iron core 11 from the top of the circumferential oil guiding groove 23. Because the coolant oil continuously flows into the inlet oil passage 21, the coolant oil also continuously flows into the axial oil passing grooves 112. Coolant oil most recently flowing into the axial oil passing grooves 112 pushes oil inside the axial oil passing grooves 112 to the two ends of the iron core 11. Because the windings 12 are respectively disposed at two ends of the axial oil passing grooves 112, the coolant oil flowing to the two ends of the iron core 11 through the plurality of axial oil passing grooves 112 falls on the windings 12 in a plurality of directions, so as to cool the windings 12. The coolant oil fallen on the windings 12 gathers in the oil passing hole 24 at a bottom of the housing 2 under an effect of gravity, flows into the outlet oil passage 22 at the bottom of the housing 2 through the oil passing hole 24, and is discharged through the outlet oil passage 22, so as to adequately cool the iron core 11 and the end windings 12.

It can be learned from the foregoing description that, according to the motor provided in this embodiment of this application, a plurality of axial oil passing grooves 112 are disposed on the outer wall of the iron core 11, so that the coolant oil reach sufficient contact with the outer wall of the iron core 11 to adequately cool the iron core 11. In addition, the coolant oil newly flowing into the axial oil passing grooves 112 may push the coolant oil inside the axial oil passing grooves 112 to the two ends of the axial oil passing grooves 112, so as to cool the end windings 12. Therefore, no spray part needs to be disposed at the two ends of the iron core 11, thereby reducing a motor assembly cost.

According to the structure of the iron core 11 provided in this embodiment of this application, it can be seen from FIG. 3 that, no complex oil passage needs to be disposed on the housing 2 that coordinates with the iron core 11 to implement flowing of the coolant oil. Only the circumferential oil guiding groove 23 needs to be disposed on the inner wall of the housing 2 to guide the coolant oil to the axial oil passing grooves 112, and an oil gathering groove 24 is disposed on the inner wall of the housing 2 to guide the coolant oil into the outlet oil passage 22, thereby reducing a manufacturing cost of the housing 2. In addition, by using the housing 2 shown in this embodiment, a volume of the housing 2 is not additionally increased, and a thickness of the housing 2 can be decreased, so that the motor 100 meets a small-volume feature. The oil cooling mechanism shown in this embodiment of this application is simpler and more reliable, and has a strong adaptability.

The following further describes the structure of the iron core 11 shown in FIG. 2.

The iron core 11 is formed by stacking and assembling a plurality of identical punchings along the axial direction. The punchings may be formed by a silicon steel material, or may be formed by another known or unknown material, which is not limited herein.

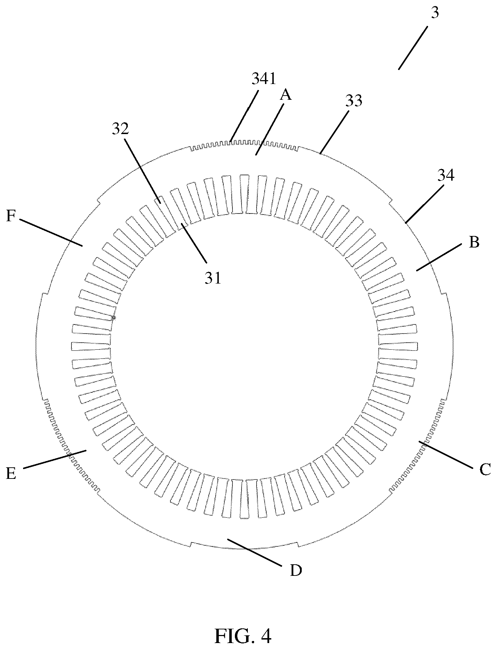

Each punching is ring-shaped. FIG. 4 schematically shows a front view of a punching 3. Toothed protrusions 31 and toothed recesses 32 are formed on the punching 3 along a circumferential direction of an inner circle, and the toothed protrusions 31 and the toothed recesses 32 are evenly distributed along the circumferential direction. It can be seen from FIG. 4 that, the toothed protrusions 31 and the toothed recesses 32 are evenly spaced, that is, a toothed protrusion 31, a toothed recess 32, a toothed protrusion 31, and a toothed recess 32... are disposed at same spaces along the circumferential direction. In a process of assembling the plurality of punchings into the iron core 11, the toothed protrusions 31 of the plurality of punchings are disposed directly opposite to each other, and the toothed recesses 32 of the plurality of punchings are disposed directly opposite to each other, so that a plurality of grooves 111 shown in FIG. 2 are formed on the inner wall of the iron core 11, and the grooves 111 are used to dispose the windings.

Arc protrusions 33 and arc grooves 34 are formed in an outer circle of the punching 3. The arc protrusions 33 and the arc grooves 34 are disposed alternately along the circumferential direction. In a process of assembling the plurality of punchings 3 into the iron core 11, the arc protrusions 33 of the plurality of punchings 3 are disposed directly opposite to each other, and the arc grooves 34 of the plurality of punchings are disposed directly opposite to each other, so that the axial oil passing grooves 112 are formed on the outer wall of the iron core 11. In specific implementation, the arc protrusions 33 and the arc grooves 34 may have same or different radians, and along the circumferential direction, a quantity of the arc protrusions 33 may be the same as or different from a quantity of the arc grooves 34. A surface of the arc protrusion 33 is smooth, and a surface of the arc groove 34 may also be smooth.

Preferably, the arc protrusions 33 and the arc grooves 34 have same radians, and the quantity of the arc protrusions 33 is the same as the quantity of the arc grooves 34.

In an example, the radians of the arc protrusions 33 and the arc grooves 34 each are 30 degrees. In other words, six arc protrusions 33 and six arc grooves 34 are disposed along the circumferential direction, and the arc protrusions 33 and the arc grooves 34 are disposed alternately, as illustrated in the punching 3 shown in FIG. 4.

In an example, the radians of the arc protrusions and the arc grooves each are 15 degrees. In other words, 12 arc protrusions and 12 arc grooves are disposed along the circumferential direction, and the arc protrusions and the arc grooves are disposed alternately. This implementation is not shown in the figures.

By setting the quantity and radians of the arc protrusions 33 to be the same as the quantity and radians of the arc grooves 34 of the punching 3, the axial oil passing grooves 112 formed by assembling the punchings 3 into the iron core 11 can be more evenly distributed along the circumferential direction, so that the coolant oil can fall on the end windings 12 in a plurality of directions, thereby improving cooling effects of the iron core and the end windings.

In this invention, pins are disposed on surfaces of at least some of the arc grooves of each punching. For example, pins may be disposed in one of the arc grooves of the punching 3, or pins may be disposed in two of the arc grooves, or pins may be disposed in all of the arc grooves. A height by which a pin protrudes outwardly does not exceed a height of a circumference on which an arc protrusion is located. This avoids a failure in tightly connecting to the housing through sleeving that is caused by an excessive height by which a pin protrudes outwardly during punching assembly. In a same arc groove, a gap is disposed between every two pins, and a width of the gap may be the same as widths of the pins.

When the punchings are assembled into the iron core, arc grooves provided with pins in every two punchings may be placed directly opposite to each other, so that pins are formed in the axial oil passing grooves 112 of the assembled iron core. When the coolant oil flows into the axial oil passing grooves 112 that have pins, turbulence flows can be formed in the axial oil passing grooves 112. In this way, the coolant oil can stay in contact with the outer wall of the iron core 11 for a longer time. In addition, when the coolant oil flows to two sides of the iron core 11, a plurality of turbulence flows can be formed in gaps of the pins and continuously flow to the end windings, so that the end windings can reach contact with the coolant oil in a larger area and for a longer time, thereby improving a cooling effect of the end windings.

The following continues to describe in detail the structure of the iron core including pins by using the punching shown in FIG. 4 as an example.

In FIG. 4, in the six arc grooves 34 of the punching 3, pins 341 are disposed in the three arc grooves 34. It can be seen from FIG. 4 that, the arc grooves 34 provided with pins 341 and the arc grooves 34 provided with no pin are disposed alternately. To be specific, using an uppermost arc groove 34 provided with pins 341 in FIG. 4 as a start, along the circumferential direction, the outer circle of the punching 3 is successively provided with an arc protrusion 33, an arc groove 34 provided with no pin, an arc protrusion 33, an arc groove 34 provided with pins 341, ..., and so on.

The figure schematically shows a case in which six arc protrusions and six arc grooves are disposed alternately. When 12 arc protrusions and 12 arc grooves are disposed alternately on the punching 3, six arc grooves may be provided with pins. The arc protrusions, the arc grooves provided with pins, and the arc grooves provided with no pin may be arranged along the circumferential direction in a same manner as that shown in FIG. 4.

In a process of stacking and assembling the plurality of punchings 3 into the iron core 11, the arc protrusions 33 of two adjacent punchings 3 are disposed directly opposite to each other, and among the arc grooves 34 of the two adjacent punchings 3, the arc grooves 34 provided with pins 341 and the arc grooves 34 provided with no pin are disposed directly opposite to each other.

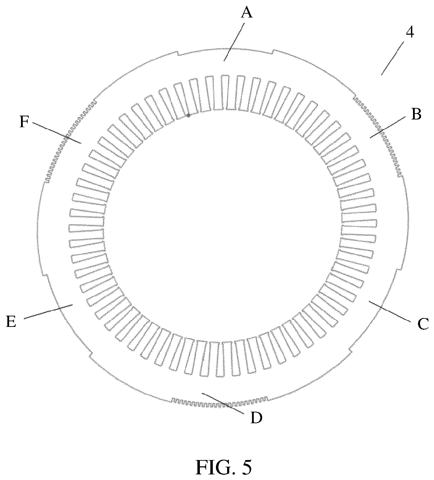

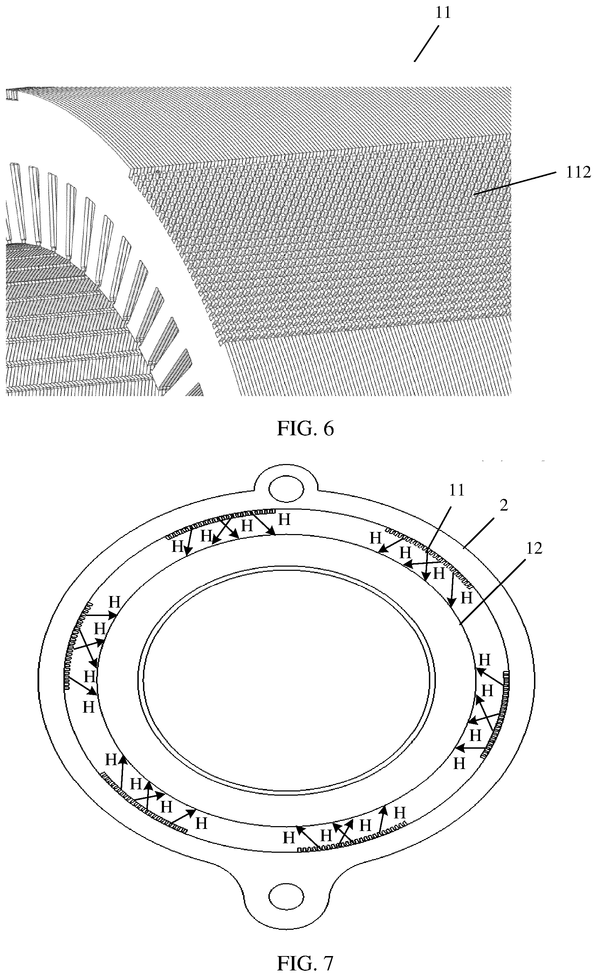

Specifically, the punching 3 shown in FIG. 4 is rotated by 60 degrees to obtain the punching 4 shown in FIG. 5. Then, the punching 3 in FIG. 4 is used as the first punching, and the punching 4 in FIG. 5 is used as the second punching. Arc grooves 34 in positions A, B, C, D, E, and F of the punching 3 shown in FIG. 4 respectively overlap arc grooves 34 in positions A, B, C, D, E, and F of the punching shown in FIG. 5. Subsequently, the third punching overlaps the punching 4 shown in FIG. 5 based on an angle of the punching shown in FIG. 4, and the fourth punching overlaps the third punching based on an angle of the punching shown in FIG. 5.... A plurality of punchings are disposed similarly and repeatedly to form the iron core 11. FIG. 2 is a schematic diagram of the iron core 11 provided with pin arrays. FIG. 6 is a partially enlarged schematic diagram of the iron core 11 provided with pin arrays.

A pin array is formed on a second surface S2 of the iron core 11, so that a gap can exist between every two pins along both the axial direction and the circumferential direction on the iron core 11. When the coolant oil flows in the pin gaps, a flow speed of the coolant oil can be greatly reduced, thereby increasing a time of contact between the coolant oil and the iron core 11. Six axial oil passing grooves 112 may be evenly distributed along the circumferential direction on the iron core 11 formed by assembling the punchings 3 shown in FIG. 4, so that the coolant oil flows in a plurality of directions on the outer wall of the iron core 11, thereby improving cooling efficiency of the iron core. When the coolant oil flows to the end windings 12, a flow direction of the coolant oil is shown by H in FIG. 7. It can be seen from FIG. 7 that, due to a function of the pins, the coolant oil is divided into a plurality of turbulence flows at an end portion of each axial oil passing groove 112, and the coolant oil may fall on the end windings 12 in a plurality of directions, thereby improving a cooling effect of the end windings 12.

In addition, the punchings that form the iron core 11 have a same structure, that is, the punchings may be manufactured by using a same process or operation, in which only angles of the punchings are rotated during punching assembling to form pin arrays in the axial oil passing grooves 112 of the iron core 11, thereby reducing a punching manufacturing cost, and further reducing a cost for forming the iron core 11.

In some optional implementations, the pins in the axial oil passing grooves 112 of the iron core 11 may be staggered. Specifically, in the plurality of punchings that form the iron core 11, pins of the first punching are directly opposite to pin gaps of the third punching, pin gaps of the first punching are directly opposite to pins of the third punching. This implementation is not shown in the figures. In this implementation, the flow speed of the coolant oil in the axial oil passing grooves 112 of the iron core 11 can be further decreased, and a cooling effect of the iron core 11 can be further improved.

The foregoing describes the embodiments of this application with reference to the accompanying drawings. However, this application is not limited to the foregoing specific implementations. The foregoing specific implementations are merely examples, and are not limitative.

## Claims

1. An iron core (11), wherein the iron core (11) is cylindrical, and the iron core (11) comprises an inner wall, an outer wall, and two ends;
grooves (111) are disposed on the inner wall of the iron core (11), and are configured to enable windings (12) to be built in, and the built-in windings (12) form end windings (12) respectively at the two ends of the iron core (11);
axial oil passing grooves (112) are disposed on the outer wall of the iron core (11), and the axial oil passing grooves (112) extend from one end of the iron core (11) to the other end along an axial direction; and
external coolant oil flows into the axial oil passing grooves (112) to cool the iron core (11), and the external coolant oil flows to the two ends of the iron core (11) through the axial oil passing grooves (112) to cool the end windings (12),
wherein the iron core (11) is formed by stacking a plurality of punchings (3) along the axial direction; and
the punching (3) is ring-shaped, a plurality of toothed grooves are disposed along a circumferential direction of an inner circle of the punching (3), and a plurality of arc protrusions (33) and a plurality of arc grooves (34) are disposed alternately along a circumferential direction of an outer circle of the punching (3);
wherein one of the following is provided: a quantity of the arc protrusions (33) of the punching (3) is equal to a quantity of the arc grooves (34) of the punching (3) or a radian of the arc protrusion (33) of the punching (3) is equal to a radian of the arc groove (34) of the punching (3);
and wherein a plurality of pins (341) are disposed in at least some of the arc grooves (34) of the punching (3), and arc grooves (34) with pins (341) formed and arc grooves (34) with no pin (341) formed are disposed alternately among the arc grooves (34) of the punching (3);
the plurality of arc grooves (34) are indented towards an interior of the punching (3) by a same depth, and the plurality of pins (341) in each arc groove (34) protrude outwardly by a same height; and
when the iron core (11) is assembled, the arc protrusions (33) of the plurality of punchings (3) are disposed directly opposite to each other along the axial direction, and the arc grooves (34) provided with pins (341) and the arc grooves (34) provided with no pin (341) are disposed alternately and directly opposite to each other among the arc grooves (34) of the plurality of punchings (3); wherein
the arc grooves (34) of the plurality of punchings (3) are stacked along the axial direction to form the axial oil passing grooves (112) of the iron core (11).

2. The iron core (11) according to claim 1, wherein there are a plurality of axial oil passing grooves (112), and the plurality of axial oil passing grooves (112) are spaced along a circumferential direction of the iron core (11).

3. The iron core (11) according to claim 2, wherein at least some of the axial oil passing grooves (112) are disposed in an upper half of the iron core (11).

4. A motor (100), comprising a housing (2) and a stator component disposed inside the housing (2), wherein
the stator component comprises windings (12) and the iron core (11) according to any one of claims 1 to 3;
the windings are built in grooves (111) on an inner wall of the iron core (11), and form end windings (12) respectively at front and rear ends of the iron core (11); and
a part on an outer wall of the iron core (11) that is provided with no axial oil passing groove (112) and an inner wall of the housing (2) abut against each other.

5. The motor (100) according to claim 4, wherein
an inlet oil passage (21) is disposed in an upper part of the housing (2);
an outlet oil passage (22) is disposed in a lower part of the housing (2);
a circumferential oil guiding groove (23) is disposed on the inner wall of the housing (2), the circumferential oil guiding groove (23) extends from the upper part of the housing (2) to the lower part of the housing (2), and a top of the circumferential oil guiding groove (23) communicates with the inlet oil passage (21);
the inner wall of the housing (2) is further provided with at least two oil passing holes (24), the at least two oil passing holes (24) are evenly disposed at the two ends of the housing (2), and each oil passing hole (24) communicates with the outlet oil passage (22);
external coolant oil falls on axial oil passing grooves (112) of the iron core (11) through the inlet oil passage (21) and the circumferential oil guiding groove to cool the iron core (11);
coolant oil gathered in the axial oil passing grooves (112) of the iron core (11) flows to the two ends of the iron core (11) through the axial oil passing grooves (112), and falls on the end windings (12) to cool the end windings (12); and
coolant oil obtained after cooling the end windings (12) flows to the outlet oil passage (22) through the oil passing holes (24), and is discharged through the outlet oil passage (22).

## Patentansprüche

1. Eisenkern (11), wobei der Eisenkern (11) zylindrisch ist und der Eisenkern (11) eine Innenwand, eine Außenwand und zwei Enden aufweist;
Nuten (111) auf der Innenwand des Eisenkerns (11) angeordnet und dafür ausgelegt sind, Einbau von Wicklungen (12) zu ermöglichen, und wobei die eingebauten Wicklungen (12) jeweils an den zwei Enden des Eisenkerns (11) Endwicklungen (12) bilden;
axiale Ölkanalnuten (112) an der Außenwand des Eisenkerns (11) angeordnet sind, und sich die axialen Ölkanalnuten (112) entlang einer Axialrichtung von einem Ende des Eisenkerns (11) zu dem anderen Ende erstrecken; und
externes Kühlöl in die axialen Ölkanalnuten (112) zum Kühlen des Eisenkerns (11) fließt, und das externe Kühlöl zum Kühlen der Endwicklungen (12) durch die axialen Ölkanalnuten (112) zu den zwei Enden des Eisenkerns (11) fließt,
wobei der Eisenkern (11) durch Stapeln einer Vielzahl von Stanzteilen (3) entlang der Axialrichtung gebildet wird;
und
das Stanzteil (3) ringförmig ist, wobei eine Vielzahl von Zahnnuten entlang einer Umfangsrichtung eines Innenkreises des Stanzteils (3) angeordnet ist und eine Vielzahl von Bogenansätzen (33) und eine Vielzahl von Bogennuten (34) alternierend entlang einer Umfangsrichtung eines Außenkreises des Stanzteils (3) angeordnet sind;
wobei eines der Folgenden vorgesehen ist: eine Anzahl der Bogenansätze (33) des Stanzteils (3) ist gleich einer Anzahl der Bogennuten (34) des Stanzteils (3) oder ein Bogenmaß des Bogenansatzes (33) des Stanzteils (3) ist gleich einem Bogenmaß der Bogennut (34) des Stanzteils (3);
und wobei eine Vielzahl von Stiften (341) in zumindest einigen der Bogennuten (34) des Stanzteils (3) angeordnet ist und Bogennuten (34) mit ausgebildeten Stiften (341) und Bogennuten (34) ohne ausgebildete Stifte (341) unter den Bogennuten (34) des Stanzteils (3) alternierend angeordnet sind;
wobei die Vielzahl von Bogennuten (34) zu einem Innern des Stanzteils (3) hin mit einer selben Tiefe eingesenkt ist und die Vielzahl von Stiften (341) in jeder Bogennut (34) mit einer selben Höhe nach außen vorsteht; und
wenn der Eisenkern (11) zusammengesetzt ist, sind die Bogenansätze (33) der Vielzahl von Stanzteilen (3) entlang der Axialrichtung einander direkt gegenüberliegend angeordnet und die mit Stiften (341) versehenen Bogennuten (34) und die nicht mit Stiften (341) versehenen Bogennuten (34) sind unter den Bogennuten (34) der Vielzahl von Stanzteilen (3) alternierend und einander direkt gegenüberliegend angeordnet; wobei
die Bogennuten (34) der Vielzahl von Stanzteilen (3) entlang der Axialrichtung gestapelt sind, um die axialen Ölkanalnuten (112) des Eisenkerns (11) zu bilden.

2. Eisenkern (11) nach Anspruch 1, wobei es eine Vielzahl von axialen Ölkanalnuten (112) gibt und die Vielzahl von axialen Ölkanalnuten (112) entlang einer Umfangsrichtung des Eisenkerns (11) beabstandet ist.

3. Eisenkern (11) nach Anspruch 2, wobei zumindest einige der axialen Ölkanalnuten (112) in einer oberen Hälfte des Eisenkerns (11) angeordnet sind.

4. Motor (100), umfassend ein Gehäuse (2) und eine Statorkomponente, innerhalb des Gehäuses (2) angeordnet, wobei die Statorkomponente Wicklungen (12) und den Eisenkern (11) nach einem der Ansprüche 1 bis 3 umfasst;
wobei die Wicklungen in Nuten (111) einer Innenwand des Eisenkerns (11) eingebaut sind und Endwicklungen (12) jeweils an Vorder- und Rückenden des Eisenkerns (11) bilden; und
wobei ein Teil an einer Außenwand des Eisenkerns (11), der mit keiner axialen Ölkanalnut (112) versehen ist, und eine Innenwand des Gehäuses (2) gegeneinander anstoßen.

5. Motor (100) nach Anspruch 4, wobei
ein Öleinlasskanal (21) in einem oberen Teil des Gehäuses (2) angeordnet ist;
ein Ölauslasskanal (22) in einem unteren Teil des Gehäuses (2) angeordnet ist;
eine Umfangsölleitnut (23) an der Innenwand des Gehäuses (2) angeordnet ist, wobei sich die Umfangsölleitnut (23) von dem oberen Teil des Gehäuses (2) zu dem unteren Teil des Gehäuses (2) erstreckt und ein Oberteil der Umfangsölleitnut (23) mit dem Öleinlasskanal (21) kommuniziert;
die Innenwand des Gehäuses (2) ferner mit mindestens zwei Ölkanallöchern (24) versehen ist, wobei die mindestens zwei Ölkanallöcher (24) gleichmäßig an den zwei Enden des Gehäuses (2) angeordnet sind und jedes Ölkanalloch (24) mit dem Ölauslasskanal (22) kommuniziert;
wobei externes Kühlöl zum Kühlen des Eisenkerns (11) durch den Öleinlasskanal (21) und die Umfangsölleitnut auf axiale Ölkanalnuten (112) des Eisenkerns (11) fällt;
in den axialen Ölkanalnuten (112) des Eisenkerns (11) gesammeltes Kühlöl zum Kühlen der Endwicklungen (12) durch die axialen Ölkanalnuten (112) zu den zwei Enden des Eisenkerns (11) fließt und auf die Endwicklungen (12) fällt; und
Kühlöl, das nach Kühlen der Endwicklungen (12) erhalten wurde, durch die Ölkanallöcher (24) zu dem Ölauslasskanal (22) fließt und durch den Ölauslasskanal (22) abgeführt wird.

## Revendications

1. Noyau en fer (11), ledit noyau en fer (11) est cylindrique et comprend une paroi intérieure, une paroi extérieure et deux extrémités ;
des rainures (111) sont disposées sur la paroi intérieure du noyau en fer (11) et sont configurées pour permettre l'intégration d'enroulements (12), les enroulements intégrés (12) formant respectivement des enroulements d'extrémité (12) aux deux extrémités du noyau en fer (11) ;
des rainures axiales de passage d'huile (112) sont disposées sur la paroi extérieure du noyau en fer (11), et les rainures axiales de passage d'huile (112) s'étendent d'une extrémité du noyau en fer (11) à l'autre extrémité dans une direction axiale ; et
de l'huile de refroidissement externe s'écoule dans les rainures axiales de passage d'huile (112) pour refroidir le noyau en fer (11), et de l'huile de refroidissement externe s'écoule vers les deux extrémités du noyau en fer (11) à travers les rainures axiales de passage d'huile (112) afin de refroidir les enroulements d'extrémité (12),
où le noyau en fer (11) est formé en empilant une pluralité de pièces découpées (3) le long de la direction axiale ; et
la pièce découpée (3) est de forme annulaire, une pluralité de rainures dentées sont disposées le long d'une direction circonférentielle d'un cercle intérieur de la pièce découpée (3), et une pluralité de saillies en arc (33) et une pluralité de rainures en arc (34) sont disposées en alternance le long d'une direction circonférentielle d'un cercle extérieur de la pièce découpée (3) ;
où l'une des conditions suivantes est satisfaite : le nombre de saillies en arc (33) de la pièce découpée (3) est égal au nombre de rainures en arc (34) de la pièce découpée (3) ou le radian de la saillie en arc (33) de la pièce découpée (3) est égal au radian de la rainure en arc (34) de la pièce découpée (3) ;
et où une pluralité de tenons (341) sont disposés dans au moins certaines des rainures en arc (34) de la pièce découpée (3), et des rainures en arc (34) comportant des tenons (341) formés et des rainures en arc (34) ne comportant aucun tenon (341) formé sont disposées en alternance parmi les rainures en arc (34) de la pièce découpée (3) ;
la pluralité de rainures en arc (34) sont en retrait vers l'intérieur de la pièce découpée (3) d'une même profondeur, et la pluralité de tenons (341) dans chaque rainure en arc (34) font saillie vers l'extérieur d'une même hauteur ; et
lorsque le noyau en fer (11) est assemblé, les saillies en arc (33) de la pluralité de pièces découpées (3) sont disposées directement en regard les unes des autres dans la direction axiale, et les rainures en arc (34) pourvues de tenons (341) et les rainures en arc (34) dépourvues de tenons (341) sont disposées en alternance et directement en regard les unes des autres parmi les rainures en arc (34) de la pluralité de pièces découpées (3) ; où
les rainures en arc (34) de la pluralité de pièces découpées (3) sont empilées le long de la direction axiale afin de former les rainures axiales de passage d'huile (112) du noyau en fer (11).

2. Noyau en fer (11) selon la revendication 1, dans lequel il existe une pluralité de rainures axiales de passage d'huile (112), et la pluralité de rainures axiales de passage d'huile (112) sont espacées le long d'une direction circonférentielle du noyau en fer (11).

3. Noyau en fer (11) selon la revendication 2, dans lequel au moins certaines des rainures axiales de passage d'huile (112) sont disposées dans une moitié supérieure du noyau en fer (11).

4. Moteur (100) comprenant un boîtier (2) et un composant statorique disposé à l'intérieur du boîtier (2), où le composant statorique comprend des enroulements (12) et le noyau en fer (11) selon l'une quelconque des revendications 1 à 3 ;
les enroulements sont intégrés dans des rainures (111) sur une paroi interne du noyau en fer (11) et forment des enroulements d'extrémité (12) respectivement aux extrémités avant et arrière du noyau en fer (11) ; et
une partie sur la paroi extérieure du noyau en fer (11) qui n'est pas pourvue de rainure axiale de passage d'huile (112) et une paroi intérieure du boîtier (2) viennent en butée l'une contre l'autre.

5. Moteur (100) selon la revendication 4, dans lequel :
un passage d'huile d'entrée (21) est disposé dans une partie supérieure du boîtier (2) ; un passage d'huile de sortie (22) est disposé dans une partie inférieure du boîtier (2) ; une rainure circonférentielle de guidage d'huile (23) est disposée sur la paroi intérieure du boîtier (2), la rainure circonférentielle de guidage d'huile (23) s'étendant de la partie supérieure du boîtier (2) à la partie inférieure du boîtier (2), et une extrémité supérieure de la rainure circonférentielle de guidage d'huile (23) communiquant avec le passage d'entrée d'huile (21) ;
la paroi interne du boîtier (2) est en outre pourvue d'au moins deux orifices de passage d'huile (24), les au moins deux orifices de passage d'huile (24) étant disposés de manière uniforme aux deux extrémités du boîtier (2), et chaque orifice de passage d'huile (24) communiquant avec le passage d'huile de sortie (22) ;
l'huile de refroidissement externe s'écoule sur les rainures axiales de passage d'huile (112) du noyau en fer (11) à travers le passage d'huile d'entrée (21) et la rainure circonférentielle de guidage d'huile afin de refroidir le noyau en fer (11) ;
l'huile de refroidissement recueillie dans les rainures axiales de passage d'huile (112) du noyau en fer (11) s'écoule vers les deux extrémités du noyau en fer (11) par les rainures axiales de passage d'huile (112), et s'écoule sur les enroulements d'extrémité (12) afin de refroidir les enroulements d'extrémité (12) ; et
l'huile de refroidissement obtenue après le refroidissement des enroulements d'extrémité (12) s'écoule vers le passage d'huile de sortie (22) par les orifices de passage d'huile (24), puis est évacuée par le passage d'huile de sortie (22).
